# EUROPÄISCHE PATENTANMELDUNG

(11) **EP 1 361 234 A1**
(43) Veröffentlichungstag der Anmeldung: **12.11.2003**
(21) Anmeldenummer: 03010083.8
(22) Anmeldetag: 03.05.2003
(51) Int. Cl.: C08G 18/08, C08G 18/32, C08G 18/79, C08G 18/75

(54) **Verfahren zur lösemittelfreien, kontinuierlichen Herstellung von Polyharnstoffen**

(30) Priorität: 10.05.2002 DE 10221047
(71) Anmelder: Degussa AG, 40474 Düsseldorf (DE)
(72) Erfinder: Weiss, Jörn Volker, Dr., 45721 Haltern am See (DE); Weihrauch, Thomas, Dr., 48249 Dülmen (DE); Grenda, Werner, 44627 Herne (DE); Herda, Silvia, 44623 Herne (DE); Behrendt, Klaus, 44628 Herne (DE)

(57) **Zusammenfassung**

Die Erfindung betrifft ein Verfahren zur lösemittelfreien, kontinuierlichen Herstellung von Polyharnstoffen, durch Umsetzung von mindestens einem Isocyanat und/oder Isocyanurat mit mindestens zwei NCO-Gruppen mit mindestens einem Diamin und/oder Polyamin in einem Extruder, Intensiv-Kneter, Intensiv-Mischer oder statischen Mischer durch intensive Durchmischung und kurzzeitiger Reaktion bei Wärmezufuhr und nachfolgender Isolierung des Endproduktes durch Abkühlung.

## Beschreibung

Die Erfindung betrifft ein Verfahren zur Lösemittel freien, kontinuierlichen Herstellung von Polyharnstoffen, durch Umsetzung von mindestens einem Diisocyanat und/oder Isocyanurat mit mindestens einem Diamin in einem Extruder, Intensiv-Kneter, Intensiv-Mischer oder statischen Mischer durch intensive Durchmischung und kurzzeitiger Reaktion bei Wärmezufuhr und nachfolgender Isolierung des Endproduktes durch Abkühlung.

Polyharnstoffe sind aus EP 1 184 399 bekannt. Sie werden, wie dort beschrieben, in Lösemitteln hergestellt. Nachteilig an dieser Herstellungsmethode ist, dass die diskontinuierliche Herstellung des Zielproduktes Polyharnstoff im Lösemittel Toluol sehr zeitaufwendig und energetisch ungünstig ist, da eine mehrstündige Trocknung des Produktes bei erhöhten Temperaturen im Vakuum erfolgen muss. Die beschriebene Methode ist für die technische Herstellung von Polyharnstoffen äußerst umständlich und aufwendig.

Aufgabe der vorliegenden Erfindung war es daher, ein neues Verfahren zur Herstellung von Polyharnstoffen zu finden, das die genannten Nachteile des Standes der Technik nicht aufweist.

Überraschenderweise wurde gefunden, dass Polyharnstoffe in einem Extruder, Intensiv-Kneter, Intensiv-Mischer oder statischen Mischer schnell und wenig aufwendig herstellbar sind.

Gegenstand der Erfindung ist daher ein Verfahren zur lösemittelfreien, kontinuierlichen Herstellung von Polyharnstoffen, durch Umsetzung von mindestens einem Isocyanat und/oder Isocyanurat mit mindestens zwei NCO-Gruppen mit mindestens einem Diamin und/oder Polyamin in einem Extruder, Intensiv-Kneter, Intensiv-Mischer oder statischen Mischer durch intensive Durchmischung und kurzzeitiger Reaktion bei Wärmezufuhr und nachfolgender Isolierung des Endproduktes durch Abkühlung.

Das Prinzip des Verfahrens besteht darin, dass die Umsetzung der Reaktionspartner kontinuierlich in einem Extruder, Intensiv-Kneter, Intensiv-Mischer oder statischen Mischer durch intensive Durchmischung und kurzzeitige Reaktion bei Wärmezufuhr erfolgt.

Es können Temperaturen von 10 bis 325 °C im Verfahren angewendet werden, wobei die Temperatur wie die Beispiele zeigen, je nach Produkt variiert.

Dies bedeutet, dass die Verweilzeit der Einsatzstoffe in den oben genannten Aggregaten üblicherweise 3 Sekunden bis 15 Minuten, bevorzugt 3 Sekunden bis 5 Minuten, besonders bevorzugt 5 bis 180 Sekunden beträgt. Die Reaktanden werden dabei kurzzeitig unter Wärmezufuhr bei Temperaturen von 25 °C bis 325 °C, bevorzugt von 50 bis 250 °C, ganz besonders bevorzugt von 70 bis 220 °C zur Reaktion gebracht. Je nach Art der Einsatzstoffe und der Endprodukte können diese Werte für Verweilzeit und Temperatur jedoch auch andere bevorzugte Bereiche einnehmen.

Es gelingt, das dabei entstehende, homogene, meist krümelige Material kontinuierlich auszutragen. Gegebenenfalls kann hier eine kontinuierliche Nachreaktion nachgeschaltet werden, ansonsten wird das heiße Produkt abgekühlt (z.B. auf einem Kühlband) und bei Bedarf weiter konfektioniert (z. B. gemahlen).

Als Aggregate sind Extruder wie Ein- oder Mehrschneckenextruder, insbesondere Zweischneckenextruder, Planetwalzenextruder oder Ringextruder, Intensiv-Kneter, Intensiv-Mischer wie Turrax-Mischer, oder statische Mischer für das erfindungsgemäße Verfahren besonders geeignet und werden bevorzugt verwendet.

Überraschend war es, dass die Umsetzung, die im diskontinuierlichen Verfahren mehrere Stunden benötigt, in den genannten Aggregaten in einigen Sekunden vollständig abläuft. Darüber hinaus fällt das Produkt in fester mehr oder weniger körniger Form an, und kann nach erfolgter Abkühlung einer weiteren Aufarbeitung (z.B. Vermahlung) oder aber auch direkt einer Lagerung (Silo) oder auch Verpackung (Absackung) zugeführt werden. Von prinzipieller Natur ist die Tatsache, dass kurzzeitige thermische Belastung im Zusammenspiel mit der Mischwirkung des Intensivkneters ausreicht, um die Reaktionspartner vollständig oder weitestgehendst umzusetzen. Die Intensivkneter ermöglichen durch geeignete Bestückung der Mischkammern bzw. Zusammenstellung der Schneckengeometrien intensive rasche Durchmischung bei gleichzeitigem intensiven Wärmeaustausch. Andererseits ist auch eine gleichmäßige Durchströmung in Längsrichtung mit möglichst einheitlicher Verweilzeit gewährleistet. Außerdem muss eine unterschiedliche Temperierung in den einzelnen Gerätegehäusen- oder Abschnitten möglich sein.

Die Reaktionspartner werden den Aggregaten in der Regel in getrennten Produktströmen zudosiert. Bei mehr als zwei Produktströmen können diese auch gebündelt zugeführt werden. Die Stoffströme können auch geteilt werden und so in unterschiedlichen Anteilen an verschiedenen Stellen den Aggregaten zugeführt werden. Auf diese Weise werden gezielt Konzentrationsgradienten eingestellt, was die Vollständigkeit der Reaktion herbeiführen kann. Die Eintrittsstelle der Produktströme in der Reihenfolge kann variable und zeitlich versetzt gehandhabt werden.

Zur Vorreaktion und/oder Vervollständigung der Reaktion können mehrere Aggregate auch kombiniert werden.

Die der schnellen Reaktion nachgeschaltete Abkühlung kann in dem Reaktionsteil integriert sein, in Form einer mehrgehäusigen Ausführungsform wie bei Extrudern oder Conterna-Maschinen. Eingesetzt werden können außerdem: Rohrbündel, Rohrschlangen, Kühlwalzen, Luftförderer und Transportbänder aus Metall.

Die Konfektionierung wird je nach Viskosität des den Intensivkneter- oder die Nachreaktionszone verlassenden Produktes zunächst durch weitere Abkühlung mittels entsprechender vorgenannter Gerätschaften auf eine geeignete Temperatur gebracht. Dann erfolgt die Pastillierung oder aber eine Zerkleinerung in eine gewünschte Partikelgröße mittels Walzenbrecher, Stiftmühle, Hammermühle, Sichtermühle, Schuppwalzen oder Ähnlichem.

Zur Herstellung der Polyharnstoffe können alle bekannten aliphatischen, cycloaliphatischen, araliphatischen sowie aromatischen Isocyanate mit mindestens zwei NCO-Gruppen und deren Isocyanurate, falls zugänglich, in reiner Form oder als beliebige Mischungen untereinander verwendet werden. Beispielhaft seien aufgeführt: Cyclohexandiisocyanate, Methylcyclohexandiisocyanate, Ethylcyclohexandiisocyanate, Propylcyclohexandiisocyanate, Methyl-diethyl-cyclohexandiisocyanate, Phenylendiisocyanate, Toluylendiisocyanate, Bis(isocyanatophenyl)methan, Propandiisocyanate, Butandiisocyanate, Pentandiisocyanate, Hexandiisocyanate (z. B. Hexamethylendiisocyanat (HDI) oder 1,5-Diisocyanato-2-methylpentan (MPDI)), Heptandiisocyanate, Octandiisocyanate, Nonandiisocyanate (z. B. 1,6-Diisocyanato-2,4,4-trimethylhexan und 1,6-Diisocyanato-2,2,4-trimethylhexan (TMDI)), Nonantriisocyanate (z. B. 4-Isocyanatomethyl-1,8-octandiisocyanat (TIN)), Dekandi- und triisocyanate, Undekandi- und -triisocyanate, Dodecandi- und -triisocyanate, Isophorondiisocyanat (IPDI), Bis(isocyanatomethylcyclohexyl)methan (H₁₂MDI), Isocyanatomethyl-methylcyclohexylisocyanate, 2,5(2,6)-Bis(isocyanatomethyl)bicyclo[2.2.1]heptan (NBDI), 1,3-Bis(isocyanatomethyl)cyclohexan (1,3-H₆-XDI) sowie 1,4-Bis(isocyanatomethyl)cyclohexan (1,4-H₆-XDI). Die Aufzählung versteht sich inklusive aller Regio- und Stereoisomeren der beispielhaft benannten Isocyanate. Bevorzugt werden HDI, IPDI, MPDI, TMDI, 1,3- und 1,4- H₆-XDI, NBDI sowie Mischungen aus HDI und IPDI eingesetzt. Bevorzugte Polyharnstoffe im Rahmen der Erfindung sind solche, die aus IPDI, IPDI-Isocyanurat, HDI oder HDI-Isocyanurat und beliebigen Gemischen daraus bestehen.

Im Rahmen der Erfindung können alle aliphatischen, (cyclo)aliphatischen, cycloaliphatischen und aromatischen Diamine und/oder Polyamine (C₅ - C₁₈) eingesetzt werden.

Als Diamine sind prinzipiell 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, 3-(Cyclohexylamino)propylamin, 4,4'-Diaminodicyclohexylmethan, Isophorondiamin, 4,7-Dioxadecan-1,10-diamin, N-(2-Aminoethyl)-1,2-ethandiamin, N-(3-Aminopropyl)-1,3-propandiamin, N,N"-1,2-Ethandiylbis-(1,3-propandiamin) sowie Hexamethylendiamine, die auch einen oder mehrere C₁-C₄-Alkylreste tragen können, geeignet. Auch Mischungen der genannten Diamine sind verwendbar. Bevorzugt wird Isophorondiamin eingesetzt.

Ebenfalls einsetzbar sind Polyamine wie z. B. 4-Aminomethyl-1,8-octandiamin, Diethylentriamin, Dipropylentriamin, Triethylentetramin und Tetraethylenpentamin.

Im Allgemeinen werden Polyharnstoffe mit einem NCO/NH₂-Verhältnis von 0,8 bis 1,2 zu 1 hergestellt. Bei Einsatz äquimolarer Mengen mit einem NCO/NH₂-Verhältnis von 1 zu 1 werden unendlich vernetzte, feste und spröde Polymere erhalten, die erst oberhalb von 240 °C unter Zersetzung schmelzen und in Lösemitteln unlöslich sind.

Bevorzugte Polyharnstoffe im Rahmen der Erfindung sind solche, die aus IPD und IPDI, und/oder IPDI-Isocyanurat, und/oder HDI und/oder HDI-Isocyanurat bestehen. Diese weisen Molmassen von mehr als 4000 auf und enthalten mindestens 8 Gew.-%, bevorzugt 20 Gew.-%, besonders bevorzugt 40 bis 100 Gew.-% Isocyanurate und/oder Amine mit einer Funktionalität > 2, bevorzugt Isocyanurate, bevorzugt IPDI- und/oder HDI-Isocyanurat. Auch Polyharnstoffe aus reinen Isocyanuraten und IPD sind bevorzugt.

Nachfolgend wird der Gegenstand der Erfindung anhand von Beispielen erläutert.

### Beispiele

### 1. Herstellung von Polyharnstoff durch Umsetzung einer Lösung von IPDI-Isocyanurat in Isophorondiisocyanat (IPDI) mit Isophorondiamin (IPD)

Der Polyharnstoff wird aus einer Mischung von 40 Gew.% IPDI -Isocyanurat und 60 Gew.% IPDI als Isocyanat-Komponente sowie IPD als Amin, hergestellt.

Das molare Verhältnis von NCO-Gruppen zu NH₂-Gruppen beträgt dabei 3,00 zu 3,20.
Beide Stoffströme werden flüssig in einen gleichläufigen Zweischneckenextruder eingespeist.
Der Extruder besitzt separat temperierbare Gehäuse (heizbar und kühlbar).

Gehäuse 1 wird bei Raumtemperatur betrieben. Die zwei folgenden Gehäuse werden auf 25 bis 60 °C beheizt, die folgenden Gehäuse werden auf 80 bis 180 °C temperiert. Die Austrittstemperatur des Produktes liegt zwischen 130 und 180 °C.

Die Isocyanat-Mischung wird in Gehäuse 1 mit einer Menge von 8,95 kg/h dosiert. Das Diamin IPD wird in Gehäuse 3 mit einem Durchsatz von 5,04 kg/h zugegeben.
Die Extruder-Drehzahl liegt bei 100 bis 250 Upm.
Das austretende, weiße, krümelige Produkt, wird auf einem Kühlband abgekühlt.

### 2. Herstellung von Polyharnstoff durch Umsetzung von HDI-Isocyanurat mit Isophorondiamin (IPD)

Das molare Verhältnis von NCO-Gruppen zu NH₂-Gruppen beträgt dabei 1,00 zu 1,00. Beide Stoffströme werden flüssig in einen gleichläufigen Zweischneckenextruder eingespeist. Der Extruder besitzt separat temperierbare Gehäuse (heizbar und kühlbar).

Gehäuse 1 wird auf 60 bis 90 °C temperiert. Gehäuse 2 wird auf 100 bis 190 °C beheizt, die folgenden drei Gehäuse werden auf 200 bis 310 °C temperiert. Es folgen zwei Gehäuse, die bei 130 bis 310 °C betrieben werden. Die Austrittstemperatur des Produktes liegt zwischen 170 und 220 °C.

Die Isocyanat-Mischung wird in Gehäuse 1 mit einer Menge von 4,07 kg/h dosiert. Dabei ist ein, auf 8 bis 10 bar eingestelltes Druckhalteventil, erforderlich. Das Diamin IPD wird in Gehäuse 3 mit einem Durchsatz von 1,78 kg/h zugegeben.
Die Extruder-Drehzahl liegt bei 150 bis 250 Upm.
Das austretende, weiße, krümelige Produkt, wird auf einem Kühlband abgekühlt.

### 3. Herstellung von Polyharnstoff durch Umsetzung von IPDI-Isocyanurat mit Isophorondiamin (IPD)

Das molare Verhältnis von NCO-Gruppen zu NH₂-Gruppen beträgt dabei 3,00 zu 3,40.

Der Extruder besitzt separat temperierbare Gehäuse (heizbar und kühlbar).

Gehäuse 1 wird auf 25 bis 60 °C temperiert. Gehäuse 2 wird auf 70 bis 120 °C beheizt, die folgenden drei Gehäuse werden auf 160 bis 190 °C temperiert. Es folgen zwei Gehäuse, die bei 110 bis 180 °C betrieben werden. Die Austrittstemperatur des Produktes liegt zwischen 120 und 170 °C.

Das Isocyanurat wird in Gehäuse 1 als grobes Pulver mit einer Menge von 4,04 kg/h dosiert. Das Diamin IPD wird flüssig in Gehäuse 4 mit einem Durchsatz von 0,83 kg/h zugegeben. Die Extruder-Drehzahl liegt bei 75 bis 225 Upm. Der austretende, weiße Feststoff wird auf einem Kühlband abgekühlt.

## Patentansprüche

1. Verfahren zur lösemittelfreien, kontinuierlichen Herstellung von Polyharnstoffen, durch Umsetzung von mindestens einem Isocyanat und/oder Isocyanurat mit mindestens zwei NCO-Gruppen mit mindestens einem Diamin und/oder Polyamin in einem Extruder, Intensiv-Kneter, Intensiv-Mischer oder statischen Mischer durch intensive Durchmischung und kurzzeitiger Reaktion bei Wärmezufuhr und nachfolgender Isolierung des Endproduktes durch Abkühlung.

2. Verfahren nach Anspruch 1,
**dadurch gekennzeichnet,**
**dass** aliphatische, cycloaliphatische, araliphatische und/oder aromatische Isocyanate und/oder Isocyanurate eingesetzt werden.

3. Verfahren nach Anspruch 2,
**dadurch gekennzeichnet,**
**dass** Cyclohexandiisocyanate, Methylcyclohexandiisocyanate, Ethylcyclohexandiisocyanate, Propylcyclohexandiisocyanate, Methyl-diethyl-cyclohexandiisocyanate, Phenylendiisocyanate, Toluylendiisocyanate, Bis(isocyanatophenyl)methan, Propandiisocyanate, Butandiisocyanate, Pentandiisocyanate, Hexandiisocyanate, wie Hexamethylendiisocyanat (HDI) oder 1,5-Diisocyanato-2-methylpentan (MPDI), Heptandiisocyanate, Octandiisocyanate, Nonandiisocyanate, wie 1,6-Diisocyanato-2,4,4-trimethylhexan oder 1,6-Diisocyanato-2,2,4-trimethylhexan (TMDI), Nonantriisocyanate, wie 4-Isocyanatomethyl-1,8-octandiisocyanat (TIN), Dekandi- und triisocyanate, Undekandiund -triisocyanate, Dodecandi- und -triisocyanate, Isophorondiisocyanat (IPDI), Bis(isocyanatomethylcyclohexyl)methan (H₁₂MDI), Isocyanatomethyl-methylcyclohexylisocyanate, 2,5(2,6)-Bis(isocyanatomethyl)bicyclo[2.2.1]heptan (NBDI), 1,3-Bis(isocyanatomethyl)cyclohexan (1,3-H₆-XDI) oder 1,4-Bis(isocyanatomethyl)cyclohexan (1,4-H₆-XDI), oder deren Isocyanurate soweit zugänglich, allein oder in Mischungen eingesetzt werden.

4. Verfahren nach Anspruch 1,
**dadurch gekennzeichnet,**
**dass** Isophorondiisocyanat (IPDI) und/oder Hexamethylendiisocyanat (HDI) und/oder deren Isocyanurate eingesetzt werden.

5. Verfahren nach mindestens einem der vorherigen Ansprüche,
**dadurch gekennzeichnet,**
**dass** aliphatische, cycloaliphatische, araliphatische und/oder aromatische Diamine eingesetzt werden.

6. Verfahren nach mindestens einem der vorherigen Ansprüche,
**dadurch gekennzeichnet,**
**dass** als Diamine 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, 3-(Cyclohexylamino)propylamin, 4,4'-Diaminodicyclohexylmethan, Isophorondiamin, 4,7-Dioxadecan-1,10-diamin, N-(2-Aminoethyl)-1,2-ethandiamin, N-(3-Aminopropyl)-1,3-propandiamin, N,N''-1,2-Ethandiylbis-(1,3-propandiamin) sowie Hexamethylendiamine, die auch einen oder mehrere C₁-C₄-Alkylreste tragen können, allein oder in Mischungen eingesetzt wird.

7. Verfahren zur Herstellung von Polyharnstoff nach Anspruch 1, enthaltend IPDI und Isophorondiamin (IPD).

8. Verfahren zur Herstellung von Polyharnstoff nach Anspruch 1, enthaltend Isocyanurat des IPDI und IPD.

9. Verfahren zur Herstellung von Polyharnstoff nach Anspruch 1, enthaltend ein Gemisch von IPDI und IPDI-Isocyanurat und IPD.

10. Verfahren zur Herstellung von Polyharnstoff nach Anspruch 1, enthaltend HDI und IPD.

11. Verfahren zur Herstellung von Polyharnstoff nach Anspruch 1, enthaltend Isocyanurat des HDI und IPD.

12. Verfahren zur Herstellung von Polyharnstoff nach Anspruch 1, enthaltend ein Gemisch von HDI und HDI-Isocyanurat und IPD.

13. Verfahren zur Herstellung von Polyharnstoff nach Anspruch 1, enthaltend ein Gemisch von IPDI- und HDI-Isocyanurat und IPD.

14. Verfahren nach mindestens einem der vorherigen Ansprüche,
**dadurch gekennzeichnet,**
**dass** die Umsetzung in einem NCO/NH₂-Verhältnis von 0,8 bis 1,2 zu 1 erfolgt.

15. Verfahren nach mindestens einem der vorherigen Ansprüche,
**dadurch gekennzeichnet,**
**dass** die Reaktion im Ein-, Zwei- oder Mehrschneckenextruder, Ringextruder oder Planetwalzenextruder erfolgt.

16. Verfahren nach Anspruch 15,
**dadurch gekennzeichnet,**
**dass** die Reaktion in einem Zweischneckenextruder erfolgt.

17. Verfahren nach einem der Ansprüche 1 bis 15,
**dadurch gekennzeichnet,**
**dass** die Reaktion in einem Intensiv-Mischer oder Intensiv-Kneter erfolgt.

18. Verfahren nach einem der Ansprüche 1 bis 15,
**dadurch gekennzeichnet,**
**dass** die Reaktion in einem statischen Mischer erfolgt.

19. Verfahren nach mindestens einem der vorherigen Ansprüche,
**dadurch gekennzeichnet,**
**dass** die Reaktion in einem Extruder, Intensiv-Kneter, Intensiv-Mischer oder statischem Mischer mit mehreren gleichen oder verschiedenen Gehäusen, die unabhängig voneinander thermisch gesteuert werden können, erfolgt.

20. Verfahren nach mindestens einem der vorherigen Ansprüche,
**dadurch gekennzeichnet,**
**dass** die Temperatur im Extruder, Intensiv-Kneter, Intensiv-Mischer oder statischen Mischer 10 bis 325 °C beträgt.

21. Verfahren nach mindestens einem der vorherigen Ansprüche,
**dadurch gekennzeichnet,**
**dass** der Extruder oder Intensiv-Kneter durch geeignete Bestückung der Mischkammern und Zusammenstellung der Schneckengeometrie einerseits zu einer intensiven raschen Durchmischung und schnellen Reaktion bei gleichzeitigem intensiven Wärmeaustausch führen, und andererseits eine gleichmäßige Durchströmung in Längsrichtung mit möglichst einheitlicher Verweilzeit bewirken.

22. Verfahren nach mindestens einem der vorherigen Ansprüche,
**dadurch gekennzeichnet,**
**dass** die Reaktion in Gegenwart von Katalysatoren und/oder Zuschlagstoffen erfolgt.

23. Verfahren nach mindestens einem der vorherigen Ansprüche,
**dadurch gekennzeichnet,**
**dass** die Einsatzstoffe und/oder Katalysator und/oder Zuschlagstoffe gemeinsam oder in getrennten Produktströmen, in flüssiger oder fester Form, dem Extruder, Intensiv-Kneter, Intensiv-Mischer oder statischen Mischer zugeführt werden.

24. Verfahren nach Anspruch 23,
**dadurch gekennzeichnet,**
**dass** die Zuschlagstoffe gemeinsam mit den Einsatzstoffen zu einem Produktstrom zusammengefasst werden.

25. Verfahren nach mindestens einem der vorherigen Ansprüche,
**dadurch gekennzeichnet,**
**dass** bei mehr als zwei Produktströmen diese gebündelt zugeführt werden.

26. Verfahren nach mindestens einem der vorherigen Ansprüche,
**dadurch gekennzeichnet,**
**dass** ein oder beide Produktströme geteilt werden.

27. Verfahren nach mindestens einem der vorherigen Ansprüche,
**dadurch gekennzeichnet,**
**dass** der Katalysator mit einem der Stoffströme zusammengefasst wird oder in einem der Ströme gelöst vorliegt.

28. Verfahren nach mindestens einem der vorherigen Ansprüche,
**dadurch gekennzeichnet,**
**dass** der Zuschlagstoff mit einem der Stoffströme zusammengefasst wird oder in einem der Ströme gelöst vorliegt.

29. Verfahren nach mindestens einem der vorherigen Ansprüchen,
**dadurch gekennzeichnet,**
**dass** die Eintrittstelle der Produktströme in der Reihenfolge variabel und zeitlich versetzt gehandhabt wird.

30. Verfahren nach mindestens einem der vorherigen Ansprüche,
**dadurch gekennzeichnet,**
**dass** eine Nachreaktion angefügt wird.

31. Verfahren nach Anspruch 30,
**dadurch gekennzeichnet,**
**dass** die Nachreaktion in kontinuierlich betriebenen Systemen, wie Rohrreaktoren, gerührten oder ungerührten Verweilzeitbehältern, Rohrbündeln, erfolgt.

32. Verfahren nach mindestens einem der vorherigen Ansprüche,
**dadurch gekennzeichnet,**
**dass** die Konfektionierung je nach Viskosität des den Extruder, Intensiv-Kneter, Intensiv-Mischer oder statischen Mischer und/oder die Nachreaktionszone verlassenden Produktes zunächst durch weitere Abkühlung auf eine zur späteren Abfüllung/Silierung hinreichende Temperatur eingeleitet wird.

33. Verfahren nach mindestens einem der Ansprüche 1 bis 32,
**dadurch gekennzeichnet,**
**dass** die Verweilzeit der Einsatzstoffe 3 Sekunden bis 15 Minuten, bevorzugt 3 Sekunden bis 5 Minuten, besonders bevorzugt 5 bis 180 Sekunden, beträgt.

34. Verfahren nach mindestens einem der Ansprüche 1 bis 33,
**dadurch gekennzeichnet,**
**dass** die Reaktion bei Temperaturen von 25 bis 325 °C, bevorzugt von 50 bis 250 °C, besonders bevorzugt von 70 bis 220 °C, erfolgt.

35. Polyharnstoffe, erhalten durch lösemittelfreie, kontinuierliche Umsetzung von mindestens einem Isocyanat und/oder Isocyanurat mit mindestens zwei NCO-Gruppen mit mindestens einem Diamin und/oder Polyamin in einem Extruder, Intensiv-Kneter, Intensiv-Mischer oder statischen Mischer durch intensive Durchmischung und kurzzeitiger Reaktion bei Wärmezufuhr und nachfolgender Isolierung des Endproduktes durch schnelle Abkühlung.

36. Polyharnstoffe nach Anspruch 35,
**dadurch gekennzeichnet, dass** Verbindungen nach mindestens einem der Ansprüche 2 bis 14 und Verfahrensparameter nach mindestens einem der Ansprüche 15 bis 34 verwendet werden.
